# EUROPEAN PATENT APPLICATION

(11) **EP 4 613 938 A2**
(43) Date of publication of application: **10.09.2025**
(21) Application number: 25162184.3
(22) Date of filing: 06.03.2025
(51) Int. Cl.: E02F 3/28, E02F 9/08, B66F 9/065, B66F 9/075

(54) **A MATERIAL HANDLING MACHINE**

(30) Priority: 07.03.2024 GB 202403332; 27.03.2024 GB 202404414
(71) Applicant: J.C. Bamford Excavators Limited, Uttoxeter Staffordshire ST14 5JP (GB)
(72) Inventor: DeBerry, Sam, Uttoxeter ST14 5JP (GB)
(74) Representative: McGeough, Gemma Ann

(57) **Abstract**

A working machine having a front and a rear defined by the principal direction of travel, the machine defining a fore-aft centreline, the machine comprising a body mounted on a ground-engaging structure to permit movement of the machine over the ground; an operator cab mounted on the body towards a first side of the centreline; a single lifting arm pivotably mounted towards an aft end of the body, the lifting arm being located within a lifting arm housing, wherein the lifting arm housing comprises a sidewall distal the cab; a drive assembly comprising a first electric motor for providing power to the ground-engaging structure; a first high voltage electric energy storage unit assembly, comprising at least one high voltage electric energy storage unit, located aft of the cab; and a second high voltage electric energy storage unit assembly, comprising at least one high voltage electric energy storage unit, located to a second side of the centreline, opposite the first side of the centreline.

## Description

### FIELD

This invention relates to a working machine having a lifting arm. More particularly, this invention relates to an electrically powered working machine.

### BACKGROUND

Telehandlers are generally well known and comprise a work machine with a pivoting telescopically extending lifting arm which allows items to be transported between different locations at varying heights with relative ease and flexibility. Telehandlers are often utilised in agriculture, construction or logistics, amongst other sectors.

Telehandlers are often described in relation to their maximum lifting load and the vertical height a load can be lifted to. Typically, loads and the lifting height will vary depending on the type of machine and industry in which it is used. For example, a compact telehandler may be rated to lift around 1400kg to a vertical height of 4m, with a larger agricultural machine lifting around 6000kg to a vertical height of 8m. However, a large range of rated loads and lifting heights are possible with some machines being configured to lift to 20m or higher and greater weights.

Another type of material handling machine are known as rotating telehandlers or roto-telehandlers or simply "rotos". These machines are configured to slew about a main vertical axis such that a main body which carries the working arm is able to rotate with respect to a ground engaging structure and chassis. Such machines are generally larger than conventional telehandlers and can handle larger loads at extended heights, e.g. in excess of 5000kg to heights above 20m, although this is not a limitation and compact roto-telehandlers which lift smaller loads to lower heights exist. Roto-telehandlers are typically used when stationary but this is not a limitation.

Other material handling machines include so-called skid steers which may also be equipped with a telescopic arm. Skid steers generally comprise a compact rigid frame with fixed wheels or tracks which do not pivot relative to the body to effect steering. The respective wheels or tracks on each side of the machine are driven in unison and have independent speed control relative to the other side such that changing the relative speed results in a change in direction. Skid steers generally have limited lifting capacity and height due to the compact nature of the machine.

A yet further type of material handling machine is a wheeled loading shovel which may also be provided with a telescopically extending shovel arm. Generally, wheeled loading shovels are characterised by an articulating chassis to effect steering. These machines are typically used with a shovel for loading large quantities of materials into a transportation vehicle or around a location and have limited extension.

Telehandlers of the type of which this disclosure is concerned may thus be differentiated over other types of material handling machine by having steerable wheels which move relative to the chassis, either in two wheel or four-wheel steering modes, and comprise a pivoting working arm or boom which is provided in a fixed relation to the chassis and ground engaging structure. Telehandlers may also be characterised by their lift capacity and height, which may generally be taken to be above 1200kg and 3m respectively.

Working machines are typically diesel-powered. However, there is a drive in the industry to move towards hybrid, electric or hydrogen powered vehicles, particularly where such vehicles are used indoors. One difficulty with this is removal of the diesel engine, since this significantly alters the weight distribution of the machine and has implications for the stability of the working machine. Counterweight requirements of the machine may be increased in order to provide stability.

Re-designing the working machine to be powered by an electric motor or motors rather than by a diesel engine can also lead to a requirement for investment in new infrastructure such as assembly lines, and reduced efficiency of assembly and maintenance operations due to the different layout of an electrically-powered machine. Other factors such as cooling must also be taken into consideration. Installation of components can be difficult due to restricted space envelopes.

The present disclosure seeks to overcome or at least mitigate the problems of the prior art.

### SUMMARY

According to a first aspect of the present disclosure, there is provided a working machine having a front and a rear defined by the principal direction of travel, the machine defining a fore-aft centreline, the machine comprising a body mounted on a ground-engaging structure to permit movement of the machine over the ground; an operator cab mounted on the body towards a first side of the centreline; a single lifting arm pivotably mounted towards an aft end of the body, the lifting arm being located within a lifting arm housing, wherein the lifting arm housing comprises a sidewall distal the cab; a drive assembly comprising a first electric motor for providing power to the ground-engaging structure; a first high voltage electric energy storage unit assembly, comprising at least one high voltage electric energy storage unit, located aft of the cab; and a second high voltage electric energy storage unit assembly, comprising at least one high voltage electric energy storage unit, located to a second side of the centreline, opposite the first side of the centreline.

Locating the electric energy storage units in such a way addresses the issue of weight distribution in the absence of a diesel engine. The weight of the electric energy storage unit or units in those locations improves stability of the working machine and provides a counterbalance to the lifting arm. The space made available by the absence of a diesel engine is advantageously utilised. Additional power capacity is enabled by providing electric energy storage units in multiple locations. Providing first and second electric energy storage unit assemblies allows flexibility of weight distribution.

The second electric energy storage unit assembly may be located to the second side of the sidewall of the lifting arm housing.

The first electric energy storage unit assembly may be mounted to the sidewall.

Such location of the second electric energy storage unit assembly improves stability of the working machine and provides a counterbalance to the lifting arm. The space made available by the absence of a diesel engine is advantageously utilised.

The first and second electric energy storage unit assemblies may be remote from one another.

Separate electric energy storage unit assemblies remote from one another, i.e. separated from one another in detached units rather than adjacent one another, allows flexible mounting arrangements, and so customised weight distribution.

At least one electric energy storage unit assembly may further comprise a mounting bracket by which said electric energy storage unit assembly is secured to the body.

Said mounting bracket may comprise a planar portion configured to support an underside of the or each electric energy storage unit.

The mounting bracket may define a recess or recesses for receiving a fork of a forklift vehicle.

Such recesses enable easy and secure handling of the electric energy storage unit assembly by a forklift vehicle.

Such a mounting bracket enables the electric energy storage units to be simply and efficiently mounted to the machine. Electric energy storage units can be mounted to the mounting bracket prior to assembly of the electric energy storage units on the machine, improving ease of installation of electric energy storage units. The bracket comprising a planar portion is a simple and effective means of supporting the electric energy storage units.

The second electric energy storage unit assembly mounting bracket may comprise a plurality of mounting positions for receiving an electric energy storage unit. The mounting positions may be linearly arranged with respect to one another, defining a fore-aft longitudinal axis.

Providing electric energy storage unit mounting positions linearly arranged with respect to one another in a fore-aft direction forms a suitable arrangement for the space envelope provided in a typical machine.

When the number of mounting positions is greater than the number of electric energy storage units secured by the mounting bracket, each electric energy storage unit may be received within the aft-most mounting position available.

Positioning the electric energy storage units as far aft as possible is advantageous for weight distribution. In a mounting bracket with capacity for more electric energy storage units than are utilised, it is advantageous to position the electric energy storage units as far aft as the mounting bracket allows.

The machine may comprise a side enclosure mounted to the side of the body to the second side of the centreline. The second electric energy storage unit assembly may be located within the side enclosure.

Locating the second electric energy storage unit assembly within a side enclosure makes effective use of available space, and allows access to the second electric energy storage unit assembly, providing ease of access for electric energy storage unit installation and replacement.

The ground-engaging structure may comprise a rear axle, and the first electric energy storage unit assembly may extend at least in part over the rear axle.

This location of the first electric energy storage unit assembly optimises weight distribution.

There is further provided a working machine having a front and a rear defined by the principal direction of travel, the machine defining a fore-aft centreline, the machine comprising a body mounted on a ground-engaging structure to permit movement of the machine over the ground; an operator cab mounted on the body towards a first side of the centreline; a single lifting arm pivotably mounted towards an aft end of the body, the lifting arm being located within a lifting arm housing, wherein the lifting arm housing comprises a sidewall distal the cab; a drive assembly comprising a first electric motor for providing power to the ground-engaging structure; at least one high voltage electric energy storage unit assembly, comprising at least one high voltage electric energy storage unit, located to a second side of the centreline, opposite the first side of the centreline; and a hydraulic tank, located to the second side of the sidewall of the lifting arm housing. Locating the electric energy storage units and the hydraulic tank in such a way addresses the issue of weight distribution in the absence of a diesel engine. The weight of the electric energy storage unit or units in those locations improves stability of the working machine and provides a counterbalance to the lifting arm. The space made available by the absence of a diesel engine is advantageously utilised.

The ground-engaging structure may comprise a pair of rear wheels, and the hydraulic tank may be shaped so as to fit within a space envelope defined at least in part by one of said wheels.

The hydraulic tank may comprise a first face at a first angle to a vertical axis of the machine.

The first angle may be within the range of 19° and 29° to the vertical axis of the machine.

The first angle may be 24° to the vertical axis of the machine.

The first face may be proximal said wheel.

Shaping the hydraulic tank to fit around the space envelope defined by the wheel enables best use of the available shape, advantageously allowing the most compact possible arrangement of components.

The hydraulic tank may comprise an enclosure defining a single chamber. The enclosure may comprise first and second wall portions.

The tank being constructed of first and second wall portions is a simple and effective tank structure.

The first wall portion may comprise a planar central portion, and opposing arms extending from the central portion and substantially perpendicular to the central portion.

Such a first wall portion advantageously provides three sides of the tank in a single component, limiting the number of components required and the number of attachments such as welds to be formed during assembly.

The second wall portion may comprise a planar central portion, and opposing arms extending from the central portion and substantially perpendicular to the central portion. The second wall portion may be complementary to the first wall portion, such that the opposing arms of the second wall portion meet the central portion of the first wall portion.

The electric energy storage unit assembly may be located to the second side of the sidewall of the lifting arm housing.

The electric energy storage unit assembly may be mounted to the sidewall.

Such location of the second electric energy storage unit assembly improves stability of the working machine and provides a counterbalance to the lifting arm. The space made available by the absence of a diesel engine is advantageously utilised.

The electric energy storage unit assembly may further comprise a mounting bracket by which the or each electric energy storage unit is secured to the body.

Said mounting bracket may comprise a planar portion configured to support an underside of the or each electric energy storage unit.

Such a mounting bracket enables the electric energy storage units to be simply and efficiently mounted to the machine. Electric energy storage units can be mounted to the mounting bracket prior to assembly of the electric energy storage units on the machine, improving ease of installation of electric energy storage units. The bracket comprising a planar portion is a simple and effective means of supporting the electric energy storage units.

The electric energy storage unit assembly mounting bracket may comprise a plurality of mounting positions for receiving an electric energy storage unit. The mounting positions may be linearly arranged with respect to one another, defining a fore-aft longitudinal axis.

Providing electric energy storage unit mounting positions linearly arranged with respect to one another in a fore-aft direction allows a suitable arrangement for the space envelope provided in a typical machine.

When the number of mounting positions is greater than the number of electric energy storage units secured by the mounting bracket, each electric energy storage unit may be received within the aft-most mounting position available.

Positioning the electric energy storage units as far aft as possible is advantageous for weight distribution. In a mounting bracket with capacity for more electric energy storage units than are utilised, it is advantageous to position the electric energy storage units as far aft as the mounting bracket allows.

The hydraulic tank may be mounted to the body by the electric energy storage unit assembly mounting bracket.

Such a hydraulic tank commonly has an associated hydraulic pump and a motor for actuating said pump. Mounting the hydraulic tank to the body by a mounting bracket advantageously allows a reduction in vibration, and therefore noise, due to the motor, in comparison to direct mounting of the hydraulic tank and associated motor to the machine body. Advantageously, the number of components used is limited by the multiple applications of the mounting bracket.

The machine may comprise a side enclosure mounted to the side of the body to the second side of the centreline.

The hydraulic tank may be located within the side enclosure.

Locating the hydraulic tank within a side enclosure makes effective use of available space, and allows easy access to the hydraulic tank for e.g. maintenance.

The electric energy storage unit assembly may be located within the side enclosure.

Locating the electric energy storage unit assembly within a side enclosure makes effective use of available space, and allows access to the electric energy storage unit assembly, providing ease of access for electric energy storage unit installation and replacement.

The machine may further comprise a hydraulic pump for actuation of the lifting arm. The hydraulic pump may be mounted to the hydraulic tank.

The hydraulic pump may be located within the side enclosure.

A compact arrangement is thus advantageously provided.

The machine may further comprise a first inverter associated with the first electric motor. The first inverter may be located within the side enclosure.

The first electric motor may be at least partially located within the side enclosure.

The machine may further comprise a second electric motor configured for actuation of said hydraulic pump. The second electric motor may be located within the side enclosure.

The machine may further comprise a second inverter associated with the second electric motor. The second inverter may be located within the side enclosure.

The machine may further comprise an auxiliary electric energy storage unit for auxiliary systems. The auxiliary electric energy storage unit may be located within the side enclosure.

The machine may further comprise, located within the side enclosure, a brake fluid reservoir.

The machine may further comprise, located within the side enclosure, a washer fluid reservoir.

The machine may further comprise, located within the side enclosure, an isolator.

The machine may further comprise, located within the side enclosure, a power distribution unit.

The operator cab may comprise a door on the cab side of the body.

The machine may comprise an electric energy storage unit charger for charging the or each electric energy storage unit, and a charge port for connection of the charger to an external power source. The charge port may be located to an aft side of the machine. The charge port may be inset from an aft-most point of the machine.

Location of the charge port at the rear of the machine allows the charge port to be positioned close to an external power source when the machine is parked, without the need to leave space for e.g. opening a side door.

The machine may comprise a further electric energy storage unit charger for charging the or each electric energy storage unit, and a further charge port for connection of the charger to an external power source.

Said further charge port may be located to an aft side of the machine.

Alternatively, said further charge port may be located to the second side of the machine.

This charge port location allows easy positioning of the machine such that the charge port is close to a power supply.

The machine may further comprise a valve block mounted to the body, and a valve block mounting arrangement. The valve block mounting arrangement may comprise a resilient mounting.

Providing a resilient mounting for the valve block advantageously reduces vibration of the valve block during operation of the machine. Reducing vibration leads to a reduction in noise. This is of particular advantage in an electrically-powered machine, where the absence of a diesel engine increases awareness of other noise.

The resilient mounting may comprise a resilient washer between the valve block and the body.

A resilient washer is a simple and effective means of providing a resilient mounting.

The machine may further comprise a compressor mounted to the body, and a compressor mounting arrangement. The compressor mounting arrangement may comprise a resilient mounting.

Providing a resilient mounting for the compressor advantageously reduces vibration of the compressor during operation of the machine. Reducing vibration leads to a reduction in noise. This is of particular advantage in an electrically-powered machine, where the absence of a diesel engine increases awareness of other noise.

The resilient mounting may comprise a resilient washer between the compressor and the body.

A resilient washer is a simple and effective means of providing a resilient mounting.

There is further provided a working machine having a front and a rear defined by the principal direction of travel, the machine defining a fore-aft centreline, the machine comprising a body mounted on a ground-engaging structure to permit movement of the machine over the ground; an operator cab mounted on the body towards a first side of the centreline; and a single lifting arm pivotably mounted towards an aft end of the body, the lifting arm being located within a lifting arm housing, wherein the lifting arm housing comprises a sidewall distal the cab.

The working machine may comprise a first electric motor for providing power to the ground-engaging structure.

The working machine may comprise at least one electric energy storage unit assembly, comprising at least one high voltage electric energy storage unit.

The working machine may comprise an electronically applied parking brake.

The working machine may further comprise an isolator for electrical disconnection of systems of the working machine. The working machine may further comprise an automatic delay system for delaying isolation.

Advantageously, delay of isolation of the working machine allows the electronically applied parking brake to be reapplied after a predetermined time after the machine is no longer in use, allowing cooling and the resulting shrinkage of brake components to be accounted for.

There is also provided an electric energy storage unit assembly comprising at least two high voltage electric energy storage units and a mounting bracket by which said electric energy storage unit assembly is secured to a body of a working machine, wherein the mounting bracket defines a recess or recesses for receiving a fork of a forklift vehicle.

Where the mounting bracket defines at least two recesses for receiving a fork of a forklift vehicle, the recesses may be sized so as to be configured to receive the forks of a forklift vehicle.

Where the mounting bracket defines at least two recesses for receiving a fork of a forklift vehicle, the recesses may be spaced from one another so as to be configured to receive the forks of a forklift vehicle.

Such recesses enable easy and secure handling of the electric energy storage unit assembly by a forklift vehicle.

There is yet further provided a working machine having a front and a rear defined by the principal direction of travel, the machine defining a fore-aft centreline, the machine comprising a body mounted on a ground-engaging structure to permit movement of the machine over the ground; an operator cab mounted on the body towards a first side of the centreline; a single lifting arm pivotably mounted towards an aft end of the body, the lifting arm being located within a lifting arm housing, wherein the lifting arm housing comprises a sidewall distal the cab; a drive assembly comprising a first electric motor for providing power to the ground-engaging structure; a first high voltage electric energy storage unit assembly, comprising at least one high voltage electric energy storage unit, located aft of the cab; and an engine, located to a second side of the centreline, opposite the first side of the centreline.

The engine may be a diesel engine.

Advantageously, a hybrid-powered machine can thus be provided.

The machine may comprise a side enclosure. The engine may be located within the side enclosure.

### BRIEF DESCRIPTION OF DRAWINGS

Embodiments will now be described by way of example only with reference to the accompanying figures, in which:
Figure 1 is a side view of a working machine on horizontal ground;
Figure 2 is an isometric view of a body and cab of the machine according to the present disclosure;
Figure 3 is an isometric view of a body of the machine according to the present disclosure;
Figure 4 is a partial isometric view of an aft portion of the body of the machine according to the present disclosure;
Figure 5 is a plan view of the aft portion of the machine shown in Figure 4;
Figure 6 is a partial isometric view of the body of the machine according to the present disclosure;
Figure 7 is a partial isometric view of an electric motor of the machine;
Figure 8 is a partial isometric view of a side of the body of the machine according to the present disclosure;
Figure 9 is a further partial isometric view of the side of the machine shown in Figure 8;
Figure 10 is a further partial isometric view of the machine, with the side enclosure in place;
Figure 11 is a partial isometric view of a side of the machine, showing a side enclosure cover in an open position;
Figure 12 is a further partial isometric view of the machine;
Figure 13 is a side view of a valve block of the machine;
Figure 14 is a side view of a compressor of the machine;
Figure 15 is a partial side view of a side of the machine;
Figure 16 is a partial plan view of a wheel and the body of the machine; and
Figure 17 is a partial isometric view of the wheel and the body of the machine of Figure 16.

### DETAILED DESCRIPTION

In the following detailed description, numerous specific details are set forth in order to provide a thorough understanding of various embodiments and the inventive concept. However, those skilled in the art will understand that: the present invention may be practiced without these specific details or with known equivalents of these specific details; that the present invention is not limited to the described embodiments; and, that the present invention may be practiced in a variety of alternative embodiments. It will also be appreciated that well known methods, procedures, components, and systems may not have been described in detail.

References to vertical and horizontal in the present disclosure should be understood to be in relation to the machine when stood on horizontal ground in a non-working condition. The term axial is generally used in relation to the longitudinal axis of the machine. The term width is generally used in relation to the longitudinal length, that is, transverse to the length.

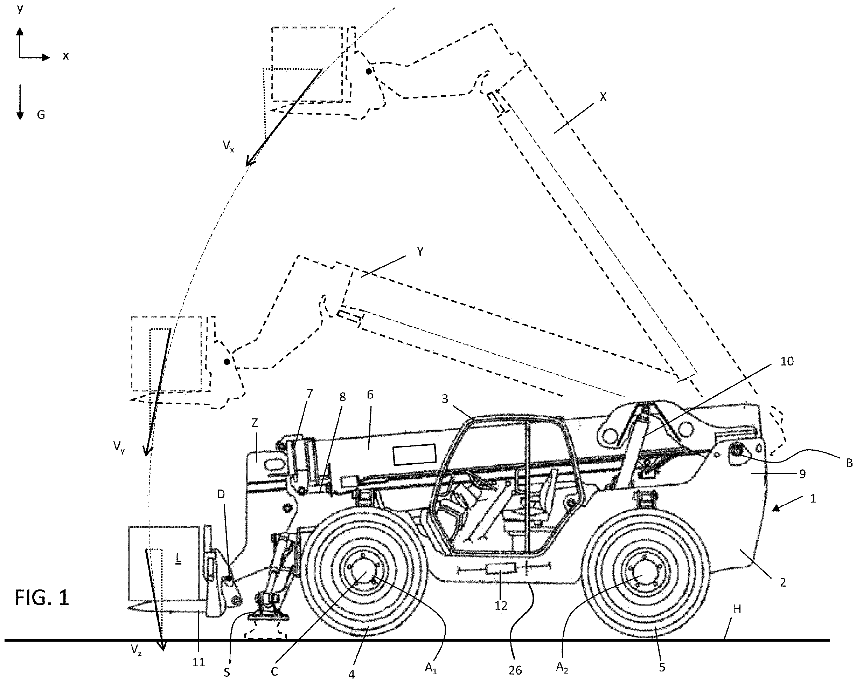

With reference to Figure 1, an embodiment of the teachings includes a machine 1 which may be a load handling machine. In this embodiment the load handling machine is a telescopic handler. In other embodiments the load handling machine may be a skid-steer loader, a compact track loader, a wheel loader, or a telescopic wheel loader, for example. Such machines may be denoted as off-highway working machines. The machine 1 includes a machine body 2 which may include, for example, an operator's cab 3 from which an operator can operate the machine 1.

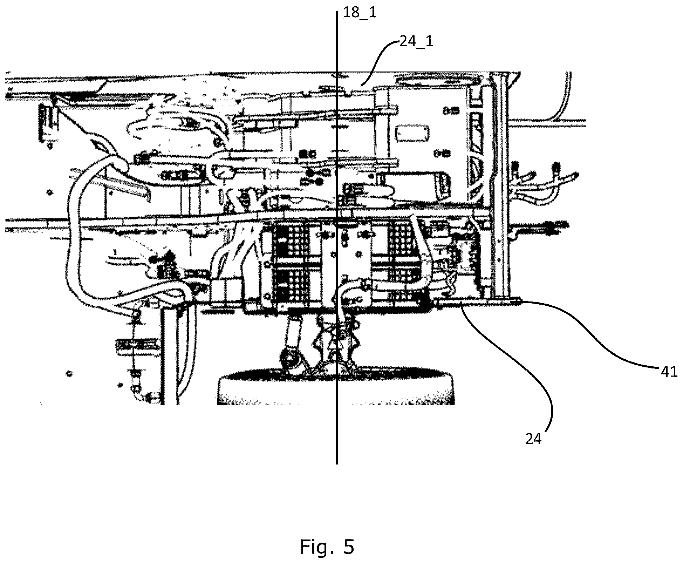

In an embodiment, the machine 1 has a ground engaging propulsion structure comprising a first axle A₁ and a second axle A₂, each axle being coupled to a pair of wheels (two wheels 4, 5 are shown in Figure 1 with one wheel 4 connected to the first axle A₁ and one wheel 5 connected to the second axle A₂). The first axle A₁ may be a front axle and the second axle A₂ may be a rear axle. One or both of the axles A₁, A₂ may be coupled to a motor 20 (see Figure 5 discussed below) which is configured to drive movement of one or both pairs of wheels 4, 5. The wheels may contact a ground surface H and rotation of the wheels 4, 5 may cause movement of the machine with respect to the ground surface. In other embodiments the ground engaging propulsion structure comprises tracks.

In an embodiment, at least one of the first and second axles A₁, A₂ is coupled to the machine body 2 by a pivot joint (not shown) located at substantially the centre of the axle such that the axle can rock about a longitudinal axis of the machine 1 - thus improving stability of the machine 1 when moving across uneven ground. It will be appreciated that this effect can be achieved in other known manners.

A load handling apparatus 6, 7 is coupled to the machine body 2. The load handling apparatus 6, 7 may be mounted by a mount 9 to the machine body 2. In an embodiment, the load handling apparatus 6, 7 includes a lifting arm 6, 7.

The lifting arm 6, 7 may be a telescopic arm having a first section 6 connected to the mount 9 and a second section 7 which is telescopically fitted to the first section 6. In this embodiment, the second section 7 of the lifting arm 6, 7 is telescopically moveable with respect to the first section 6 such that the lifting arm 6, 7 can be extended and retracted. Movement of the first section 6 with respect to the second section 7 of the lifting arm 6, 7 may be achieved by use of an extension actuator 8 which may be a double acting hydraulic linear actuator. In some embodiments, movement of the first section 6 with respect to the second section 7 may be achieved by use of an electric linear actuator, a telescopic extension ram, multiple extension rams, and/or a chain and pulley system. One end of the extension actuator 8 is coupled to the first section 6 of the lifting arm 6, 7 and another end of the extension actuator 8 is coupled to the second section 7 of the lifting arm 6, 7 such that extension of the extension actuator 8 causes extension of the lifting arm 6, 7 and retraction of the extension actuator 8 causes retraction of the lifting arm 6, 7. As will be appreciated, the lifting arm 6, 7 may include a plurality of sections: for example, the lifting arm 6, 7 may comprise two, three, four or more sections. Each arm section may be telescopically fitted to at least one other section.

The lifting arm 6, 7 can be moved with respect to the machine body 2 and the movement is preferably at least in part rotational movement about the mount 9 (about pivot B of the lifting arm 6, 7). The rotational movement is about a substantially transverse axis of the machine 1, the pivot B being transversely arranged.

Rotational movement of the lifting arm 6, 7 with respect to the machine body 2 is, in an embodiment, achieved by use of at least one lifting actuator 10 coupled, at one end, to the first section 6 of the lifting arm 6, 7 and, at a second end, to the machine body 2. The lifting actuator 10 is a double acting hydraulic linear actuator, but may alternatively be single acting. In some embodiments, the lifting actuator is an electric linear actuator.

Figure 1 shows the lifting arm 6, 7 positioned at three positions, namely X, Y and Z, with positions X and Y shown in dashed lines in simplified form. When positioned at position X the angle between the lifting arm and a ground level is 55°. This angle is measured with respect to the longitudinal major portion of the lifting arm 6, 7, i.e. the part that extends and retracts if the arm is telescopic. In other embodiments, a different measure of the angle may be used, for example an angle defined using a notional line between the pivot B and the pivot D for the load handling implement (see below). When positioned at position Y the angle is 27°. When positioned at position Z the angle is -5°. 55° and -5° represent the upper and lower limits of angular movement for the machine 1 with stabilisers retracted. The upper limit may be permitted to be increased to, say, 70° when the stabilisers are deployed to contact the ground (see below). Clearly, the lifting arm can be positioned at any angle between these limits. Other machines may have different upper and lower angular limits dependent upon the operational requirements of the machine (maximum and minimum lift height and forward reach etc.) and the geometry of the machine and load handling apparatus (e.g. position of pivot B, dimensions of cranked portion at the distal end of the second section 7 of the lifting arm 6, 7). As will be appreciated, when the lifting arm is positioned relatively close to the ground it is at a relatively small angle and when it is positioned relatively remotely from the ground it is at a relatively large or high angle.

A load handling implement 11 may be located at a distal end of the lifting arm 6, 7. The load handling implement 11 may include a fork-type implement which may be rotatable with respect to the lifting arm 6, 7 about a pivot D, this pivot also being transversely arranged. Other implements may be fitted such as shovels, grabs etc. Movement of the load handling implement 11 may be achieved by use of a double acting linear hydraulic actuator (not shown) coupled to the load handling implement 11 and the distal end of the section 7 of the lifting arm 6, 7.

Off-highway machines 1 of the teachings are configured to transport loads L over uneven ground, i.e. with a load held by the load handling implement 11, an operator controls the propulsion structure to move the entire machine with the load from one location to another.

This may be contrasted with machines such as mobile cranes and roto-telehandlers in which a boom is pivotable about both a lateral and an upright axis - i.e. the boom can slew relative to a machine body on a turret or turntable - as well as pivot upwards about the lateral axis. Such machines may be driven to a particular location and are immobilised on four or more stabiliser legs to lift the wheels or other propulsion means entirely off the ground, and to ensure the upright slew axis is absolutely vertically aligned. From that fixed location the machine will move a load from one location to another location using a movements of the boom about the lateral and upright axes. As such, different stability considerations apply to machines in which a boom can also move about an upright axis. Therefore different safety legislation, and consequently different safety systems, are employed on such machines.

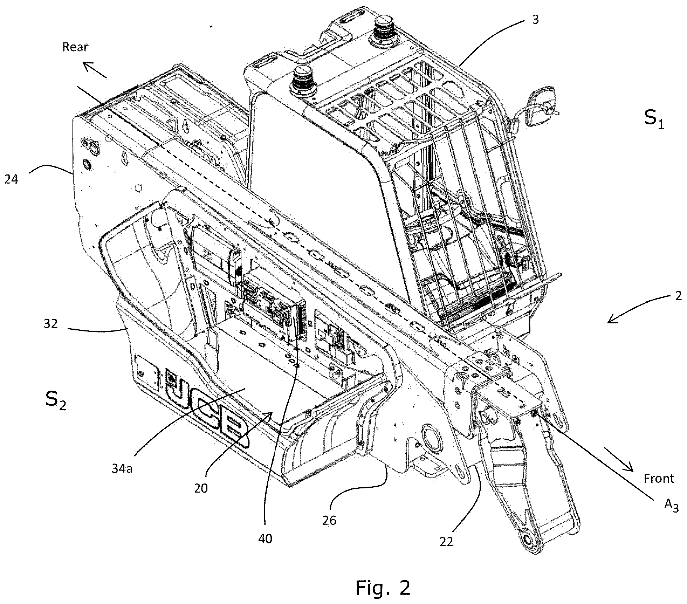

In the illustrated embodiment, the operator cab 3 has a fixed angular orientation with respect to the front and/or rear axles A₁ and A₂. As shown in Figure 2, the working machine 1 has a longitudinal axis A₃.

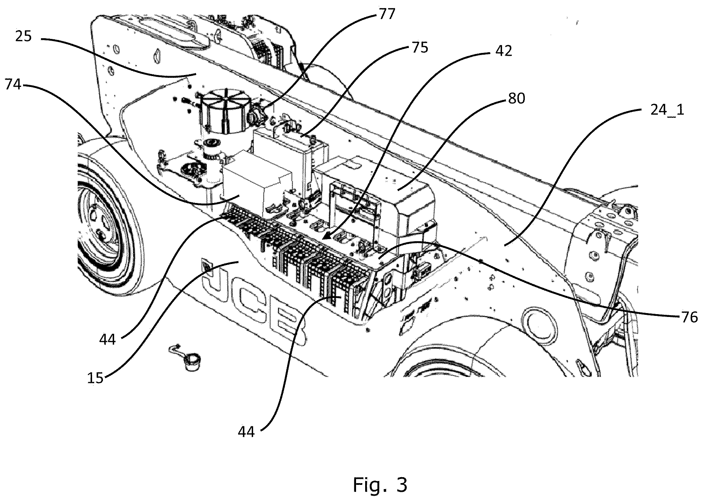

With reference now to Figures 3 to 5, the material handling machine 1 of the present disclosure has first and second electric energy storage unit assemblies 40, 42. Each electric energy storage unit assembly 40, 42 includes at least one battery or electric energy storage unit 44.

The first electric energy storage unit assembly 40 is located aft of the cab 3.

The material handling machine 1 of the present disclosure has a first or cab side S₁ of the centre line A₃, and a second side S₂ of the centre line A₃, opposing the cab side. The second electric energy storage unit assembly 42 is positioned to the second side S₂ of the centre line A₃.

As referred to herein, the term "side" is used to mean a surface of the working machine that is not the top or bottom with respect to the normal orientation of the machine, and is not the front or back with respect to the direction of travel of the machine over ground.

The machine 1 having first and second electric energy storage unit assemblies 40, 42 allows flexibility of positioning of the electric energy storage units 44, so that weight distribution of the electric energy storage units 44 on the machine 1 can be optimised. The design difficulties created by the removal of a diesel engine can be addressed, allowing a similar body to be used for the machine 1, and so advantageously limiting re-design of both the machine 1 and assembly lines. Stability of the material handling machine 1 can be optimised, as a counterbalance can be provided to the lifting arm by the electric energy storage unit assemblies 40, 42. Advantageously, the counterweight requirements for the machine 1 may be decreased.

In positioning the second electric energy storage unit assembly 42 to the second side S₂ of the centre line A₃, the space opened up by the removal of a diesel engine is advantageously utilised, as a diesel engine would normally be located to the second side S₂ of the centre line.

In the material handling machine 1 of this disclosure, the second electric energy storage unit assembly 42 is wholly positioned to the second side S₂ of the centre line A₃. That is, the second electric energy storage unit assembly 42 is positioned such that no part of the electric energy storage unit or units 44 included in the second electric energy storage unit assembly 42 is to the first side S₁ of the centre line A₃. In an alternative material handling machine 1, a majority of the second electric energy storage unit assembly is located to the second side S₂ of the centre line A₃.

The second electric energy storage unit assembly 42 of the material handling machine 1 of the present disclosure is positioned to the second side S₂ in relation to the sidewall 24_1 of the lifting arm housing 25. The second electric energy storage unit assembly 42 is in the material handling machine 1 of the present disclosure mounted to the sidewall 24_1. Mounting of the second electric energy storage unit assembly 42 to the sidewall 24_1 will be described in further detail below.

In the machine 1 of the present disclosure, the first and second electric energy storage unit assemblies 40, 42 are remote from one another. That is, the first and second electric energy storage unit assemblies 40, 42 are located separately to one another on the machine 1. The first and second electric energy storage unit assemblies 40, 42 are spaced apart from one another, rather than being in a single array. The first and second electric energy storage unit assemblies 40, 42 are configured for installation separate to one another.

Provision of first and second electric energy storage unit assemblies 40, 42 at different locations of the body 2 enables customisation and thus optimisation of weight distribution on the material handling machine 1.

In addition, provision of the first electric energy storage unit assembly 40 aft of the cab 3 allows the machine to be a hybrid-powered machine. That is, in one embodiment (not shown), the electric energy storage unit assembly 40 is provided in combination with a diesel engine positioned to the second side S₂ of the centre line A₃, e.g. in a side enclosure of the machine. In such an arrangement, the diesel engine would be the prime mover. In this embodiment, the machine includes a hydraulic tank, located aft of the cab.

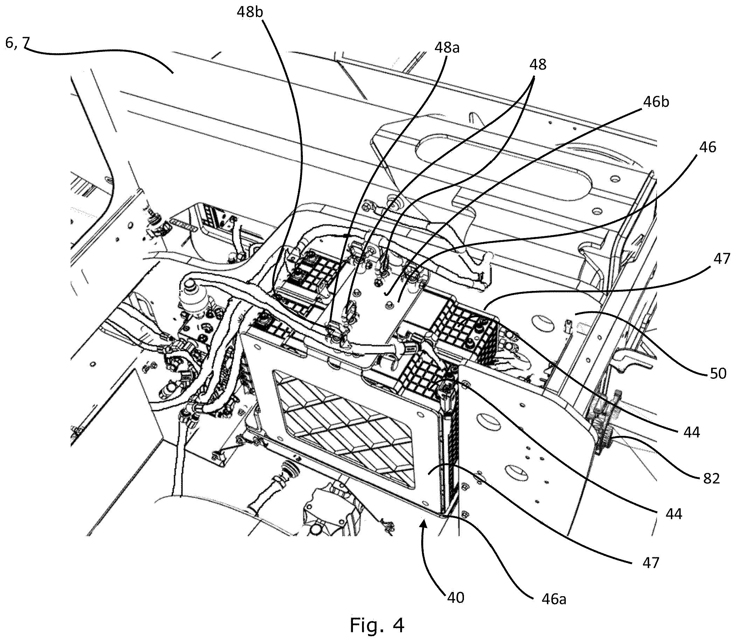

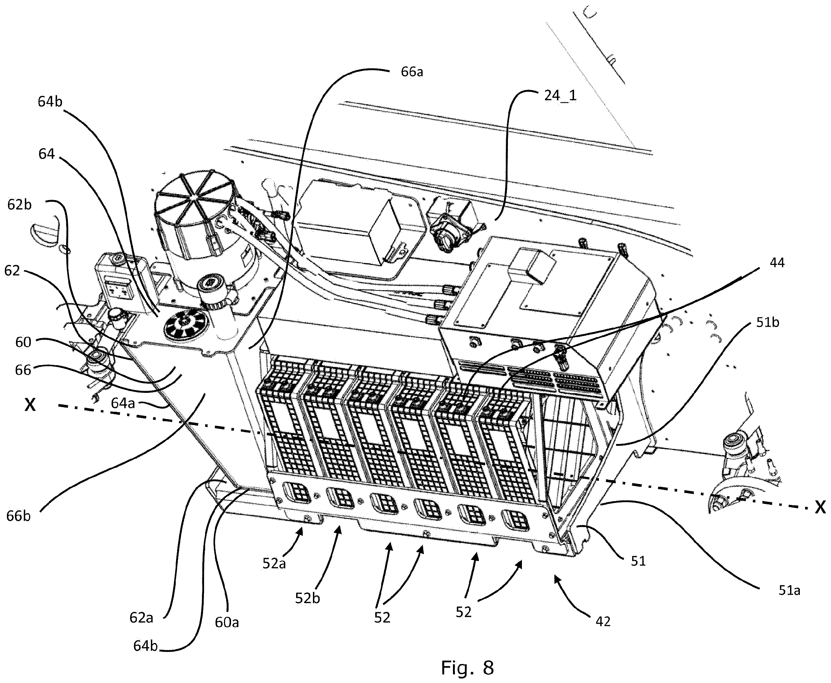

As shown most clearly in Figures 4 and 8, each electric energy storage unit assembly 40, 42 includes a series of electric energy storage units 44 mounted to the machine 1 by a mounting bracket 46, 51. The first electric energy storage unit assembly 40 includes in this embodiment two electric energy storage units 44. In alternative embodiments, the first electric energy storage unit assembly 40 includes one electric energy storage unit 44 or three or more electric energy storage units 44.

The first electric energy storage unit assembly 40 includes a mounting bracket 46 having a base plate 46a upon which the electric energy storage units 44 are supported. The base plate 46a is secured to a sidewall 50 of the chassis 24, so as to secure the first electric energy storage unit assembly 40 to the machine 1.

In this embodiment, the first electric energy storage unit assembly 40 is further secured to the sidewall 50 by a top plate 46b which forms part of the mounting bracket 46. Two side plates 47 serve to secure the electric energy storage units with respect to one another and to the top plate 46b.

In this embodiment, the first electric energy storage unit assembly 40 includes at least one pin 48 for improving ease of handling and installation of the first electric energy storage unit assembly 40. In this embodiment, each pin 48 has a loop 48a defining an aperture 48b, by which the pin can be grasped, e.g. manually or by a suitable tool. Each pin 48 of this embodiment is secured to the top plate 46b, e.g. each pin 48 is received in a corresponding aperture in the top plate 46b in an interference fit.

The first electric energy storage unit assembly 40 is assembled as a unit prior to installation, in order to allow efficient and easy installation of the electric energy storage units 44.

In this embodiment, the sidewall 50 is adjacent the lifting arm 6, 7, such that the first electric energy storage unit assembly 40 is proximal the lifting arm 6, 7. In alternative embodiments, the first electric energy storage unit assembly 40 is positioned further from the centre line A₃, and from the lifting arm 6, 7, i.e. further towards the first side S₁, depending on the required weight distribution.

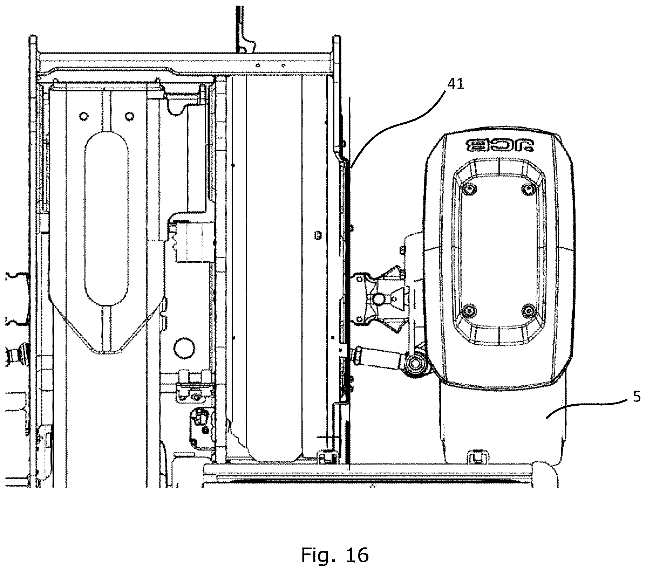

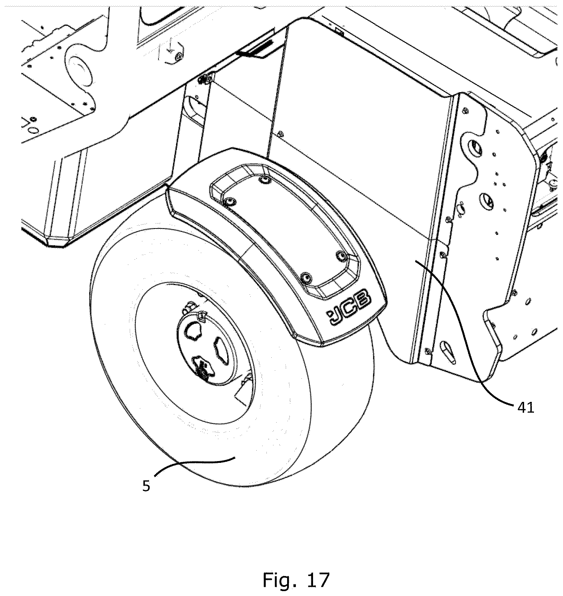

The first electric energy storage unit assembly 40 extends towards the rear wheel 5 on the first side S₁. In this embodiment, the body 2 includes a housing 41 within which the first electric energy storage unit assembly 40 is housed. In this embodiment, as shown in Figures 16 and 17, the housing 41 is shaped to allow the extension of the first electric energy storage unit assembly 40 towards the rear wheel 5, whilst being shaped to provide a space envelope such that clearance of the wheel 5 is provided as it is turned. The most effective use of the available space can thus be made.

As shown in Figure 8, the mounting bracket 51 of the second electric energy storage unit assembly 42 includes a planar or substantially planar portion 51a upon which the electric energy storage units 44 are supported. The mounting bracket 51 has side plates 51b for securing components mounted thereon. The mounting bracket 51 is secured to the sidewall 24_1 so as to mount the second electric energy storage unit assembly 42 to the body of the machine 1.

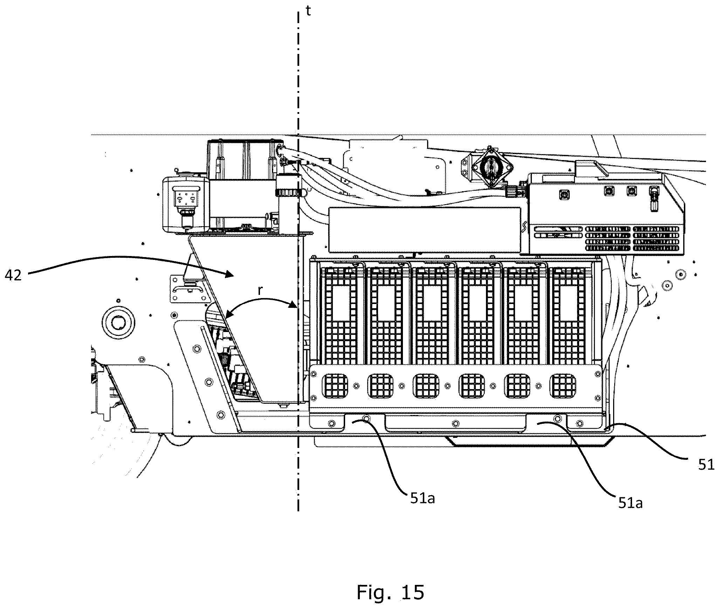

The mounting bracket 51 is shown in further detail in Figure 15. In this embodiment, the second electric energy storage unit assembly 42 includes at least one recess 51a configured to receive a fork of a forklift vehicle, for ease of handling and transportation of the second electric energy storage unit assembly 42. In this embodiment, the second electric energy storage unit assembly 42 incorporates two such recesses 51a. In this embodiment, the recesses 51a are defined by the mounting bracket 51. The recesses 51a are sized, and spaced from one another, so as to be configured to receive the forks of a forklift vehicle.

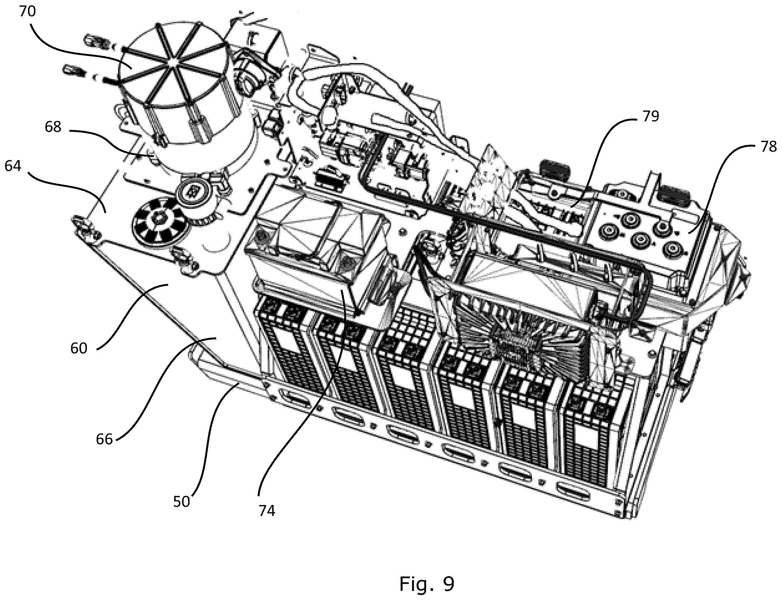

As shown in Figures 8 and 9, the second electric energy storage unit assembly 42 of this embodiment includes six electric energy storage units 44. In alternative embodiments, the second electric energy storage unit assembly has five or fewer electric energy storage units 44, or seven or more electric energy storage units 44.

The second electric energy storage unit assembly 42 has a series of mounting positions 52 for electric energy storage units 44. In the disclosed embodiment, each mounting position 52 has an electric energy storage unit 44 mounted therein. The mounting positions 52 are linearly arranged with respect to one another defining a fore-aft longitudinal axis X. It may be that a full complement of electric energy storage units 44, i.e. as many electric energy storage units as there are mounting positions 52, is not required for a particular machine. In such a case, the aft-most mounting position 52a will in one particular embodiment receive the first electric energy storage unit 44. The second aft-most mounting position 52b will receive the second electric energy storage unit 44, and so on. That is, where the number of mounting positions 52 is greater than the number of electric energy storage units 44 in the second electric energy storage unit assembly 42, each electric energy storage unit 44 is received within the aft-most mounting position 52 available. Advantageously, weight distribution is kept as far aft as is possible, optimising stability of the machine 1.

As with the first electric energy storage unit assembly 40, the second electric energy storage unit assembly 42 includes at least one pin 48 for improving ease of handling and installation of the first electric energy storage unit assembly 40. In this embodiment, each pin 48 has a loop 48a defining an aperture 48b, by which the pin can be grasped, e.g. manually or by a suitable tool. Each pin 48 of this embodiment is secured to the top plate 46b.

The second electric energy storage unit assembly 42 is assembled as a unit prior to installation, in order to allow efficient and easy installation of the electric energy storage units 44.

As shown in Figures 2 and 3, the machine 1 of the present disclosure includes a side enclosure 15 in which components are housed. In this embodiment, the second electric energy storage unit assembly 42 is located within the side enclosure 15. The side enclosure 15 is mounted to the side of the machine body 2 to the second side S₂ of the centre line. Locating the second electric energy storage unit assembly 42 within the side enclosure provides protection to the electric energy storage unit assembly 42 whilst allowing it be positioned in a suitable location, making effective use of the available space.

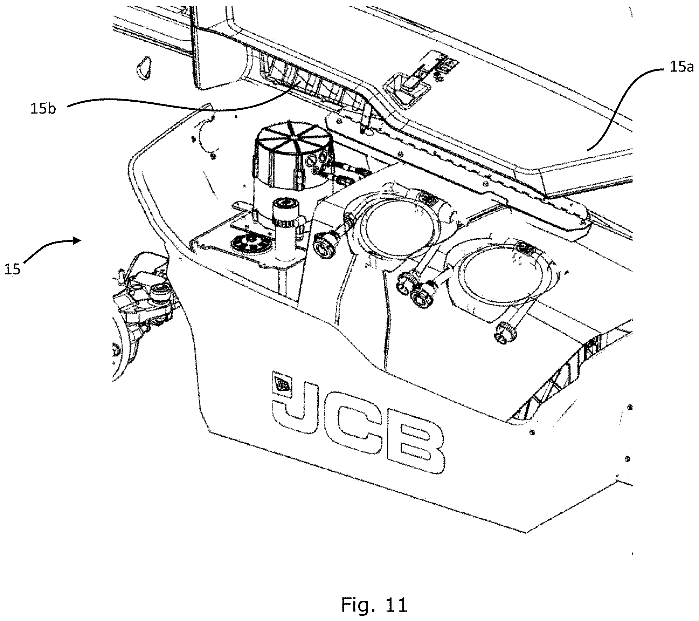

Access to the second electric energy storage unit assembly, e.g. for charging and/or installation and replacement of the electric energy storage units 44, is easily provided via a cover 15a of the side enclosure (see Figure 11). The cover 15a is hingedly secured to the sidewall 24_1, and is configured to be openable in order to provide access to the side enclosure 15, e.g. for servicing.

As shown schematically in Figure 5, the material handling machine 1 of the present disclosure includes a rear axle A₂ upon which the rear wheels 5 are supported. In this embodiment, the first electric energy storage unit assembly 40 extends in an aft-ward direction over the rear axle A₂. This location of the first electric energy storage unit assembly improves weight distribution of the material handling machine 1.

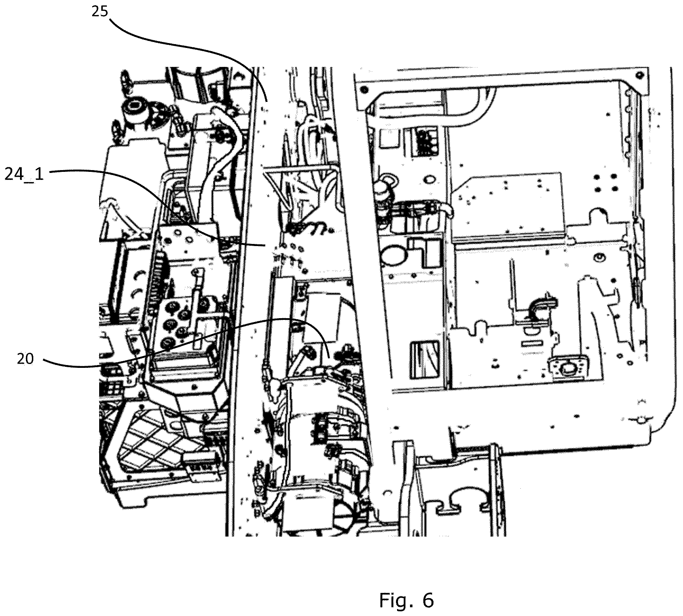

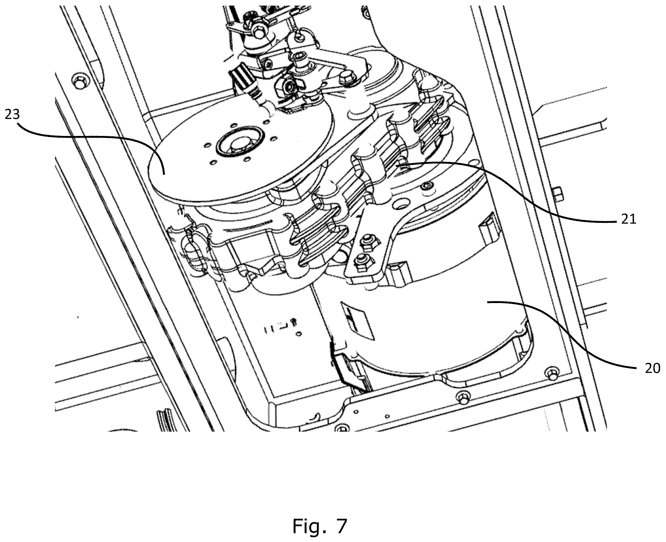

With reference now to Figures 6 and 7, the motor 20 of the present disclosure is positioned substantially beneath the lifting arm housing 25. The machine 1 of the present disclosure includes a "dropbox" 21, i.e. a series of two or more gears with parallel axes configured to transfer power from the motor 20 to the ground engaging structure A₁, A₂. In one embodiment, the dropbox is a two-speed dropbox including a two-speed gear arrangement.

The machine 1 of the present disclosure includes a service brake in the form of a disc brake 23. In an alternative embodiment, the service brake is a drum brake. In one embodiment (not shown), the machine 1 includes a spring applied, hydraulic release parking brake. In one embodiment (not shown), the machine 1 includes an electronic parking brake, where brake pads are applied by an electric motor. In such an embodiment, the parking brake may be reapplied after a predetermined length of time, in order to allow for shrinkage of components such as a brake disc on cooling.

In such an embodiment, a time delay to isolation of the machine may be required, in order for reapplication of the parking brake to take place. For example, an instruction is given to a machine operator not to isolate the machine for a predetermined time, or an automatic delay is applied after the instruction to isolate is given.

The material handling machine 1 of the present disclosure includes a hydraulic tank 60, best seen in Figures 8 and 9. In this embodiment, the hydraulic tank 60 is positioned to the second side S₂ of the sidewall 24_1 of the lifting arm housing 25.

The hydraulic tank 60 is shaped so as to fit within a space envelope defined at least in part by one of the rear wheels 5. That is, the hydraulic tank 60 has an angled face 62 opposing or proximal to the rear wheel 5 to the second side S₂ of the machine 1. The face 62 is angled to fit around the wheel 5 such that a lower end 62a of the face 62 is towards the front of the machine 1 in relation to an upper end 62b of the face 62. In this embodiment, the face 62 is at an angle r of substantially 24° to the vertical, i.e. to a vertical axis t of the machine 1 (see Figure 15). In alternative embodiments, the face 62 is at an angle r of between 19° and 29° to the vertical. A tank 60 of such a shape makes best use of the available space envelope, allowing the hydraulic tank 60 to fit at the second side of the sidewall 24_1.

The hydraulic tank 60 is in this embodiment secured to the machine body 2 at least in part by the mounting bracket 51 of the second electric energy storage unit assembly 42. A lower, outboard mounting point 60a of the hydraulic tank 60 is mounted to the planar portion 51a of the mounting bracket 51. The tank 60 is resiliently mounted to the bracket 51, e.g. by means of a resilient washer. The tank 60 is further secured to the machine body 2 by means of an upper mount (not shown) secured to the sidewall 24_1.

The hydraulic tank 60 of this embodiment is a single chamber tank. That is, the hydraulic tank 60 comprises an enclosure that defines a single chamber for holding hydraulic fluid.

The hydraulic tank 60 of the present disclosure is formed from only two portions, first and second wall portions 64, 66. The first and second wall portions 64, 66 fit together to create the enclosure of the hydraulic tank 60. Each wall portion 64, 66 is substantially U shaped in cross-section, such that each wall portion 64, 66 forms three sides of the tank 60.

The first wall portion 64 has a planar central portion 64a from which opposing arms 64b extend at an angle of substantially 90°. In this embodiment, the planar portion 64a forms the angled face 62a. The opposing arms 64b provide top and bottom sides of the hydraulic tank 60.

The second wall portion 66 has a planar central portion 66a and opposing arms 66b extending therefrom substantially 90° to the planar portion 66a. The arms 66b form the sides of the hydraulic tank 60. The central planar portion 66a forms a front face of the hydraulic tank 60.

The opposing arms 64b, 66b interlock and adjoin one another, each extending to meet the planar central portion 66a, 64a of the other wall portion, to form the enclosure.

In the present disclosure, the first and second wall portions 64, 66 are welded to one another to form the hydraulic tank 60. In this embodiment, the tank 60 is of steel. In alternative embodiments, the tank is of some other suitable material.

Such an arrangement provides a simple and effective way of forming the hydraulic tank 60. Advantageously, a limited number of components are required. Manufacture of the hydraulic tank is also relatively simple, as the amount of e.g. welding required to secure the first and second wall portions 64, 66 to one another is limited.

In alternative embodiments, the hydraulic tank is formed of some other number of wall portions, and/or of some alternative type of structure.

In this embodiment, the hydraulic tank is located to the second side S₂ of the side wall 24_1. The second electric energy storage unit assembly 42 is positioned forward of the hydraulic tank 60.

The second electric energy storage unit assembly 42 is mounted to the body 2 via the mounting bracket 51, as described above. In this embodiment, the hydraulic tank 60 is supported by the mounting bracket 51.

The hydraulic tank 60 of this embodiment has a pin or pins 48 such as those described above secured to a top surface thereof, in order to facilitate handling.

The machine 1 includes a hydraulic pump 68 for actuation of the lifting arm. The machine 1 also includes a second electric motor 70 for actuation of the hydraulic pump 68. The hydraulic pump 68 is mounted to the hydraulic tank 60, and in this embodiment is at least partially submerged therein. The second electric motor 70 is supported on the hydraulic tank 60.

As the hydraulic tank 60 is secured to the chassis 24 by the mounting bracket 51, transfer of vibration of the motor to the rest of the machine 1 is advantageously reduced, leading to a reduction in noise levels. That is, vibrations from the accompanying noise from the second electric motor 70 are reduced in comparison to the motor being directly mounted to the chassis.

Mounting the hydraulic tank 60 via the mounting bracket 51 also advantageously limits the number of components used.

The hydraulic tank 60 of the present disclosure is located within the side enclosure 15. Advantageously, such location of the hydraulic tank 60 allows effective use of the available space, e.g. the space opened up by the removal of a diesel engine of the machine design.

Also housed within the side enclosure 15, as shown in Figure 3, is an auxiliary 12V electric energy storage unit 74, for providing power to auxiliary systems such as lights. The 12V electric energy storage unit 74 is supported on a bracket 76 that is secured to the sidewall 24_1.

The machine 1 includes a power distribution unit 75 and an isolator 77, both housed within the side enclosure 15. The power distribution unit 75 is supported by the bracket 76. The isolator 77 is mounted to the sidewall 24_1. Location of the isolator 77 in the side enclosure 15 improves use of access and maintenance.

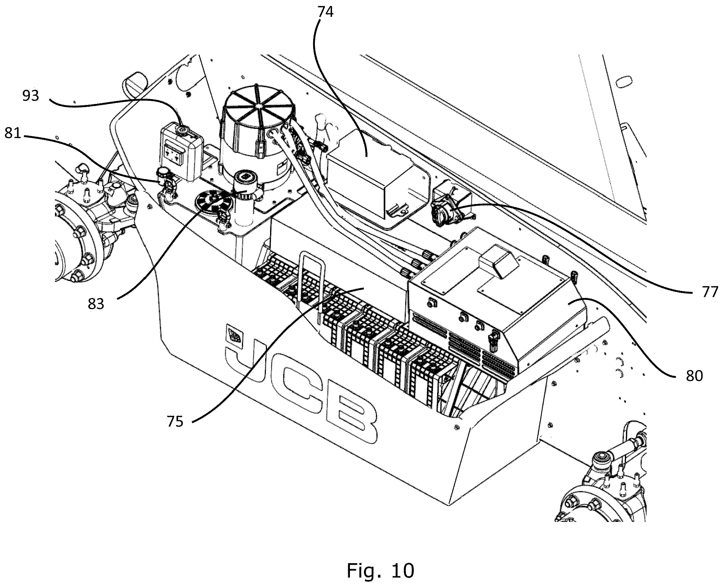

The machine 1 includes a first inverter 78 and a second inverter 79 (see Figure 9) in a subassembly. The first inverter 78 is associated with the first electric motor 20. The second inverter 79 is associated with the second electric motor 70. Each inverter 78, 79 has an associated heat sink. The inverters 78, 79 are supported on the bracket 76. As shown in Figure 10, the inverter subassembly includes an inverter cover 80 that covers the inverters 78, 79.

As shown in Figure 10, also mounted within the side enclosure 15 are service points for brake fluid 81, hydraulic fluid 83 and washer fluid 93. Advantageously, mounting such service points in the side enclosure 15 provides easy access for maintenance.

Figure 11 shows the side enclosure 15 with the cover 15a in an open position. In this embodiment, the cover is configured to provide integrated cable storage. That is, an inside face 15b of the cover 15a is shaped to provide slots for receiving charger cables and the like. Advantageously, such storage provides easy access, increasing efficiency of e.g. vehicle charging.

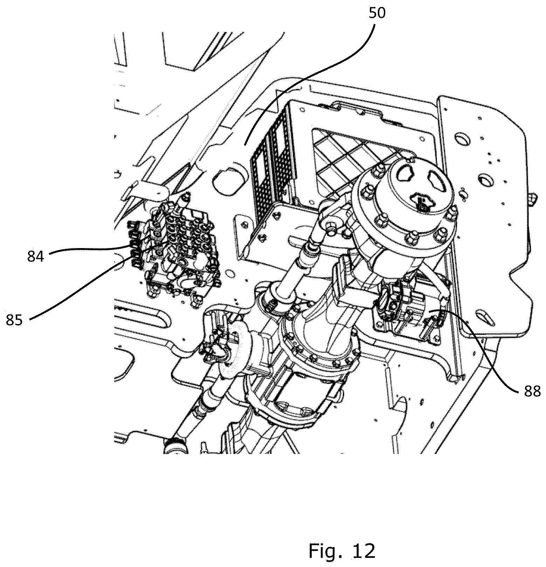

With reference now to Figures 12 to 14, the machine 1 further includes a valve block 84. The valve block 84 includes electro-hydraulic valves 85 for controlling hydraulic flow. In the machine 1 of the present disclosure, the valve block is positioned between the cab 3 and the first electric energy storage unit assembly 40. As shown in Figure 12, the valve block 84 is mounted to the sidewall 50.

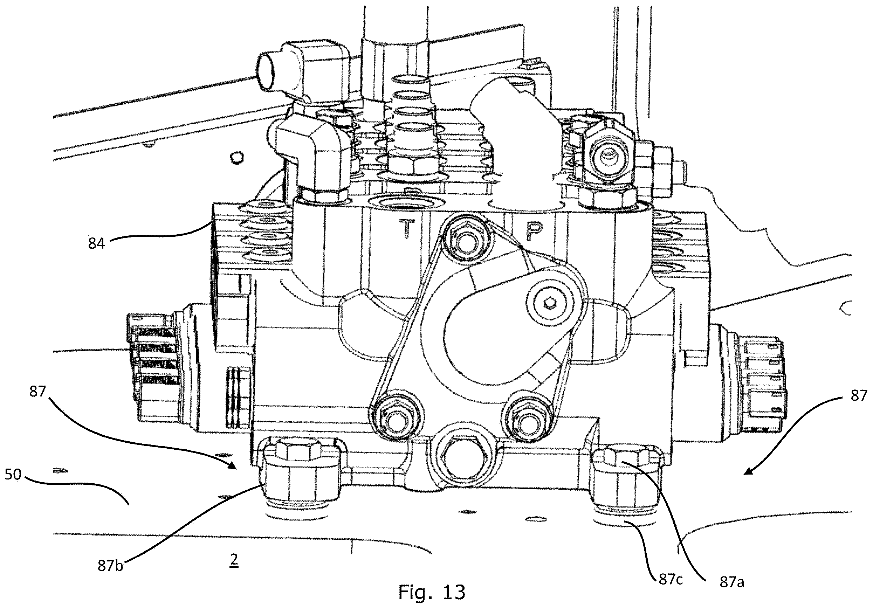

Figure 13 shows a mounting arrangement 86 by which the the valve block 84 is secured to the body 2 in further detail. The mounting arrangement 86 includes multiple mounting points 87. Each mounting point 87 includes a bolt 87a that extends through an aperture defined by a projection 87b of the valve block 84. The bolts 87a are threaded, and are received in apertures in the sidewall 50, and each is secured by a nut (not shown) to secure the valve block 84 to the sidewall 50.

The mounting arrangement 86 includes a resilient mounting 87c. Advantageously, the resilient mounting 87c reduces vibration of the valve block 84 during machine operation, and so reduces noise. Each mounting point 87 includes a resilient washer 87c between the projection 87b and the sidewall 50. In this embodiment, the resilient washers 87c are of silicone rubber. In alternative embodiments, the washers are of some other suitable resilient material.

In alternative embodiments, the valve block 84 is mounted to the body by some other suitable means.

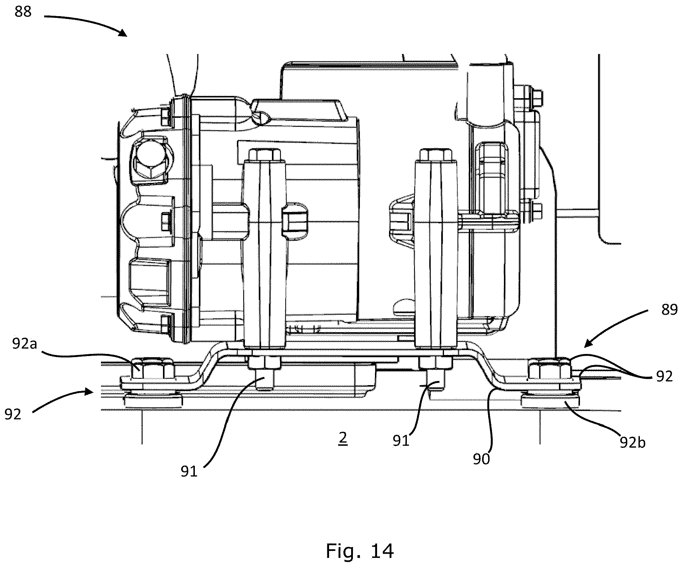

The machine 1 further includes an air conditioning compressor 88 as shown in Figures 12 and 14. The compressor 88 is electrically driven. As shown in Figure 14, the compressor 88 includes a mounting arrangement 89. The mounting arrangement 89 includes a bracket 90 to which the compressor 88 is secured. In this embodiment, the compressor 88 is secured to the bracket by bolts 91. The mounting arrangement 89 includes multiple mounting points 92 at which the bracket 90 is secured to the machine body 2. Each mounting point 92 includes a bolt 92a that extends through an aperture in the bracket 90. The bolts 92a are threaded, and are secured by a nut (not shown) in the side wall 50.

The mounting arrangement 92 includes a resilient mounting 92b. Advantageously, the resilient mounting 92b reduces vibration of the compressor 88 during operation, and so reduces noise. Each mounting point 92 includes a resilient washer 92b between the bracket 90 and the side wall 50. In this embodiment, the resilient washers 92b are of silicone rubber. In alterative embodiments, the washers are of some other suitable resilient material.

In alternative embodiments, the compressor 88 is mounted to the body by some other suitable means.

The machine 1 of the present disclosure includes an electric energy storage unit charger and charge port 82 (see Figure 4). The charge port 82 is externally accessible by a door. The charger and charge port 82 are located to the aft of the machine 1, i.e. such that the charge port 82 is accessible from the aft end of the machine 1. The charge port 82 is inset to protect the charge port 82 from external damage. The machine 1 may include a second charger and charge port, e.g. a charger of different current, facilitating charging of the electric energy storage units at different speeds.

Advantageously, much of the machine body 2 of this embodiment is similar to that of a known diesel power machine, keeping redesign and assembly costs to a minimum.

The one or more embodiments are described above by way of example only and it will be appreciated that variations are possible without departing from the scope of protection afforded by the pending claims.

## Claims

1. A working machine having a front and a rear defined by the principal direction of travel, the machine defining a fore-aft centreline, the machine comprising:
a body mounted on a ground-engaging structure to permit movement of the machine over the ground;
an operator cab mounted on the body towards a first side of the centreline;
a single lifting arm pivotably mounted towards an aft end of the body, the lifting arm being located within a lifting arm housing, wherein the lifting arm housing comprises a sidewall distal the cab;
a drive assembly comprising a first electric motor for providing power to the ground-engaging structure;
a first high voltage electric energy storage unit assembly, comprising at least one high voltage electric energy storage unit, located aft of the cab; and
a second high voltage electric energy storage unit assembly, comprising at least one high voltage electric energy storage unit, located to a second side of the centreline, opposite the first side of the centreline.

2. The machine of claim 1, wherein the second electric energy storage unit assembly is located to the second side of the sidewall of the lifting arm housing; optionally wherein the first electric energy storage unit assembly is mounted to the sidewall; optionally wherein the first and second electric energy storage unit assemblies are remote from one another.

3. The machine of claim 1 or 2, wherein at least one electric energy storage unit assembly further comprises a mounting bracket by which said electric energy storage unit assembly is secured to the body; optionally wherein said mounting bracket comprises a planar portion configured to support an underside of the or each electric energy storage unit, optionally wherein the mounting bracket defines a recess or recesses for receiving a fork of a forklift vehicle.

4. The machine of claim 3, wherein the second electric energy storage unit assembly mounting bracket comprises a plurality of mounting positions for receiving an electric energy storage unit, wherein the mounting positions are linearly arranged with respect to one another, defining a fore-aft longitudinal axis.

5. The machine of claim 4, wherein, when the number of mounting positions is greater than the number of electric energy storage units secured by the mounting bracket, each electric energy storage unit is received within the aft-most mounting position available.

6. The machine of any preceding claim, wherein the ground-engaging structure comprises a rear axle, and wherein the first electric energy storage unit assembly extends at least in part over the rear axle.

7. A working machine having a front and a rear defined by the principal direction of travel, the machine defining a fore-aft centreline, the machine comprising:
a body mounted on a ground-engaging structure to permit movement of the machine over the ground;
an operator cab mounted on the body towards a first side of the centreline;
a single lifting arm pivotably mounted towards an aft end of the body, the lifting arm being located within a lifting arm housing, wherein the lifting arm housing comprises a sidewall distal the cab;
a drive assembly comprising a first electric motor for providing power to the ground-engaging structure;
at least one high voltage electric energy storage unit assembly, comprising at least one high voltage electric energy storage unit, located to a second side of the centreline, opposite the first side of the centreline; and
a hydraulic tank, located to the second side of the sidewall of the lifting arm housing.

8. The machine of claim 7, wherein the ground-engaging structure comprises a pair of rear wheels, and wherein the hydraulic tank is shaped so as to fit within a space envelope defined at least in part by one of said wheels, and/or wherein the hydraulic tank comprises a first face at a first angle to a vertical axis of the machine, wherein the first angle is within the range of 19° and 29° to the vertical axis of the machine, optionally wherein the first angle is 24° to the vertical axis of the machine, optionally wherein the first face is proximal said wheel.

9. The machine of claim 7 or claim 8, wherein the hydraulic tank comprises an enclosure defining a single chamber; wherein the enclosure comprises first and second wall portions; optionally wherein the first wall portion comprises a planar central portion, and opposing arms extending from the central portion and substantially perpendicular to the central portion; optionally wherein the second wall portion comprises a planar central portion, and opposing arms extending from the central portion and substantially perpendicular to the central portion, wherein the second wall portion is complementary to the first wall portion, such that the opposing arms of the second wall portion meet the central portion of the first wall portion.

10. The machine of any one of claims 7 to 9, wherein the electric energy storage unit assembly is located to the second side of the sidewall of the lifting arm housing; optionally wherein the electric energy storage unit assembly is mounted to the sidewall.

11. The machine of any one of claims 7 to 10, wherein the electric energy storage unit assembly further comprises a mounting bracket by which the or each electric energy storage unit is secured to the body; optionally wherein said mounting bracket comprises a planar portion configured to support an underside of the or each electric energy storage unit; optionally wherein the hydraulic tank is mounted to the body by the electric energy storage unit assembly mounting bracket.

12. The machine of claim 11, wherein the electric energy storage unit assembly mounting bracket comprises a plurality of mounting positions for receiving an electric energy storage unit, wherein the mounting positions are linearly arranged with respect to one another, defining a fore-aft longitudinal axis; optionally wherein, when the number of mounting positions is greater than the number of electric energy storage units secured by the mounting bracket, each electric energy storage unit is received within the aft-most mounting position available.

13. The machine according to any one of claims 7 to 12, comprising a side enclosure mounted to the side of the body to the second side of the centreline, wherein the hydraulic tank is located within the side enclosure; optionally further comprising an auxiliary electric energy storage unit for auxiliary systems, wherein the auxiliary electric energy storage unit is located within the side enclosure; optionally wherein the machine further comprises, located within the side enclosure, a brake fluid reservoir, and/or a washer fluid reservoir, and/or an isolator, and/or a power distribution unit.

14. The machine according to any one of claims 7 to 13, comprising a side enclosure mounted to the side of the body to the second side of the centreline, wherein the electric energy storage unit assembly is located within the side enclosure; optionally further comprising a hydraulic pump for actuation of the lifting arm, wherein the hydraulic pump is mounted to the hydraulic tank; optionally wherein the hydraulic pump is located within the side enclosure.

15. The machine of claim 13 or 14, wherein the machine further comprises a first inverter associated with the first electric motor, wherein the first inverter is located within the side enclosure; and/or wherein the first electric motor is at least partially located within the side enclosure; optionally wherein the machine further comprises a hydraulic pump for actuation of the lifting arm, wherein the hydraulic pump is mounted to the hydraulic tank, and wherein the machine further comprises a second electric motor configured for actuation of said hydraulic pump, wherein the second electric motor is located within the side enclosure; optionally wherein the machine further comprises a second inverter associated with the second electric motor, and wherein the second inverter is located within the side enclosure.
